# EUROPEAN PATENT APPLICATION

(11) **EP 3 808 237 A1**
(43) Date of publication of application: **21.04.2021**
(21) Application number: 20201225.8
(22) Date of filing: 12.10.2020
(51) Int. Cl.: A47J 42/40

(54) **COFFEE GRINDING MACHINE WITH REMOVABLE DELIVERY CONDUIT**

(30) Priority: 16.10.2019 IT 201900003689 U
(71) Applicant: Conti Valerio - S.r.l., 50019 Sesto Fiorentino (FI) (IT)
(72) Inventor: FIORANI, MAURIZIO, 20122 MILANO (IT)
(74) Representative: Baldi, Claudio

(57) **Abstract**

A coffee grinding machine (100) comprises: a hopper (1) loaded with coffee beans, a grinding unit (2) suitable for grinding the coffee beans supplied from the hopper in such a way to obtain ground coffee, a delivery conduit (4) connected to a body (3) of the coffee grinding machine in communication with the grinding unit (2) to deliver ground coffee and fast coupling/uncoupling means (M) suitable for providing a fast coupling/uncoupling of the delivery conduit (4) with/from the body (3) of the coffee grinding machine.

## Description

The present utility model relates to a coffee grinding machine with removable delivery conduit.

As it is known, the catering services provided with coffee machines that use ground coffee are also provided with coffee grinding machines. In fact, coffee beans maintain their organoleptic characteristics much better than ground coffee. Therefore, the catering services are provided with a stock of coffee beans that are ground with the coffee grinding machine when they are to be used.

A coffee grinding machine generally comprises:
- a hopper loaded with coffee beans,
- a grinding unit disposed in a grinding chamber to grind the coffee beans in such a way to obtain ground coffee,
- a delivery conduit in communication with the grinding chamber to deliver ground coffee.

The ground coffee is ejected from the grinding machine by means of two or more rotary tabs that force the ground coffee to pass through a lateral slot of the grinding chamber, ending in the delivery conduit.

A drawback of said coffee grinding machines consists in the fact that the tabs are not able to completely eject the ground coffee in the grinding chamber. Therefore, residues of ground coffee remain in the grinding chamber and are mixed with the new ground coffee, impairing the organoleptic qualities.

The Italian patent application No. 102018000009379 in the name of the same applicant discloses a delivery conduit with a funnel shape wherein the grinding unit is disposed, in such a way to ensure the complete emptying of the grinding chamber after delivering a dose of ground. However, said delivery conduit is generally integral with the body of the machine or is in any case fixed firmly to the body of the machine by means of screw means and fit-in couplings that are difficult to remove. In fact, in order to unscrew the screw means and remove the fit-in couplings, an operator must act from the inside of the frame of the machine; namely, the operator must dismount the frame of the machine before dismounting the delivery conduit. Evidently, such an operation is time-consuming, requires the use of special tools and the presence of a specialized operator. Consequently, in such a type of machine, the cleaning and the maintenance of the grinding unit are complicated operations.

The purpose of the present invention is to eliminate the drawbacks of the prior art by disclosing a coffee grinding machine with delivery conduit that can be removed easily and rapidly to ensure the easy cleaning and maintenance of the grinding unit.

Another purpose of the present invention is to disclose such a coffee grinding machine that is reliable, versatile and easy to maintain.

An additional purpose of the present invention is to disclose such a coffee grinding machine that ensures the perfect emptying of the grinding chamber after the delivery of a dose of ground coffee.

These purposes are achieved according to the invention with the characteristics of the independent claim 1.

Advantageous embodiments of the invention appear from the dependent claims.

The coffee grinding machine of the invention is defined by the independent claim 1.

Additional features of the invention will be clearer from the following detailed description, which refers to merely illustrative, not limiting embodiments, as shown in the appended figures, wherein:
Fig. 1 is a sectional view of the coffee grinding machine according to the invention;
Fig. 2 is a sectional view of a first embodiment of fast coupling/uncoupling means of magnetic type for the coupling/uncoupling of the delivery conduit;
Fig. 3 is a perspective view of the delivery conduit of Fig. 2, fixed to the body of the machine;
Fig. 4 is a perspective rear view of the delivery conduit;
Fig. 5 is a side view of the delivery conduit;
Fig. 6 is a front perspective view of a second embodiment of the fast coupling/uncoupling means of mechanical fit-in type;
Figs. 7 and 8 are sectional views taken along the planes VII-VII and VIII-VIII of Fig. 6;
Figs. 9, 10 and 11 are perspective views of the delivery conduit of Fig. 6, respectively a rear view, a side view and a front view;
Fig. 12 is a partially sectional perspective view of the fit-in coupling of the fast coupling/uncoupling means of Fig. 6; and
Figs. 13 and 14 are two enlarged sectional views of the unlock mechanism of the fast coupling/uncoupling means of Fig. 6.

With reference to the figures, a coffee grinding machine according to the invention is disclosed, which is generally indicated with reference numeral (100).

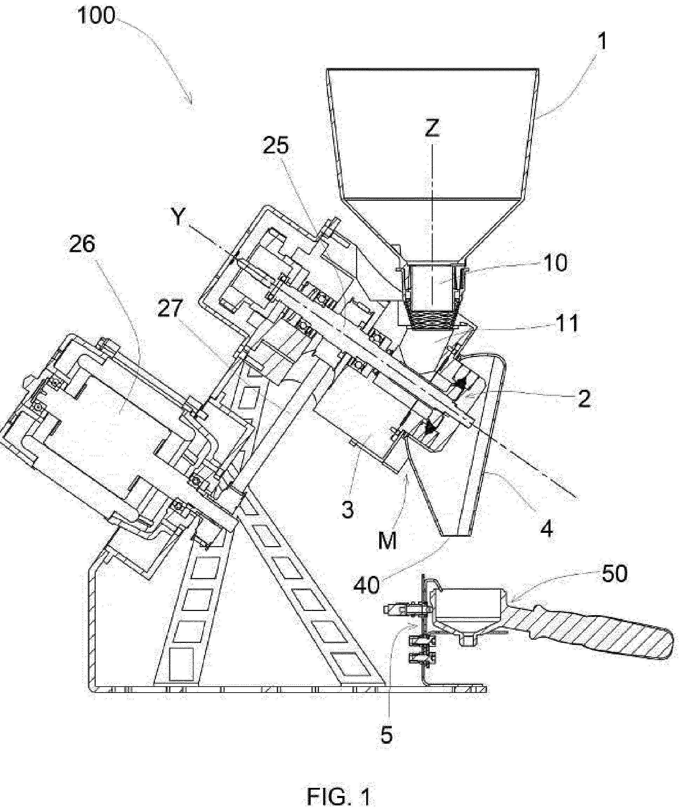

With reference to Fig. 1, the coffee grinding machine (100) comprises a hopper (1) or receptacle that contains coffee beans suitable for being ground.

A doser (10) is disposed in the hopper (1) in order to measure a dose of coffee beans. The doser (10) has a vertical axis (Z). The doser (10) communicates with a conveying funnel (11) that ends in the grinding unit (2).

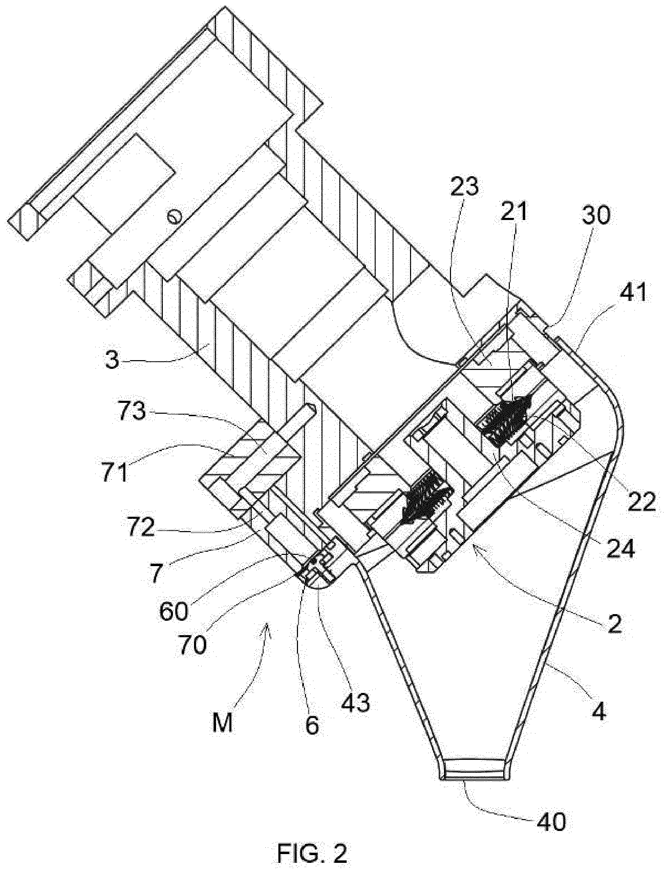

With reference to Fig. 2, the grinding unit (2) comprises:
- a first blade (21) mounted on a fixed blade-holder (23) fixed to a body (3) of the coffee grinding machine, and
- a second blade (22) connected to a rotary blade-holder (24) connected to a rotary shaft (25) (Fig. 1).

With reference to Fig. 1, the axis (Y) of the rotary shaft (25) is inclined relative to the axis (Z) of the doser (10) by an angle of approximately 30°-60°, preferably 45°. The rotary shaft (25) is rotated by an electric motor (26) by means of a belt transmission (27).

The grinding unit (2) is disposed inside a delivery conduit (4). The delivery conduit (4) has a funnel shape with decreasing dimensions going towards a delivery mouth (40). The delivery conduit (4) has a vertical axis that is parallel or coincident with the axis (Z) of the doser (10).

Although the delivery conduit (4) shown in the drawings has a funnel shape, the delivery conduit (4) can be a traditional grinding chamber wherein the grinding unit is disposed (2).

A support (5) is suitable for supporting a filter-holder (50) or container in such a way that the filter-holder (50) is disposed under the delivery mouth (40) of the delivery conduit to receive the ground coffee.

According to the invention, the coffee grinding machine (1) comprises fast coupling/uncoupling means (M) for the fast coupling/uncoupling of the delivery conduit (4) with/from the body (3) of the coffee grinding machine.

The fast coupling/uncoupling means (M) are means used by the user to couple the delivery conduit (4) with the body (3) of the machine and uncouple the delivery conduit (4) from the body of the machine in a simple, rapid way, without using tools to screw and unscrew screws and without the need to dismount the frame of the coffee grinding machine in order act from the interior of the body of the coffee grinding machine.

With reference to Figs. 2-5, a first embodiment of the fast coupling/uncoupling means (M) that consist in magnetic retention means is disclosed.

The fast coupling/uncoupling means (M) comprise magnets (6) that are engaged with ferromagnetic supports (7). The magnets (6) can be fixed to the delivery conduit (4) and the ferromagnetic supports (7) can be fixed to the body (3) or vice versa. In view of the above, the user can couple the delivery conduit (4) by simply putting the magnets (6) in contact with the ferromagnetic supports (7) and can uncouple the delivery conduit (4) overcoming the magnetic attraction force between the magnets (6) and the ferromagnetic supports (7).

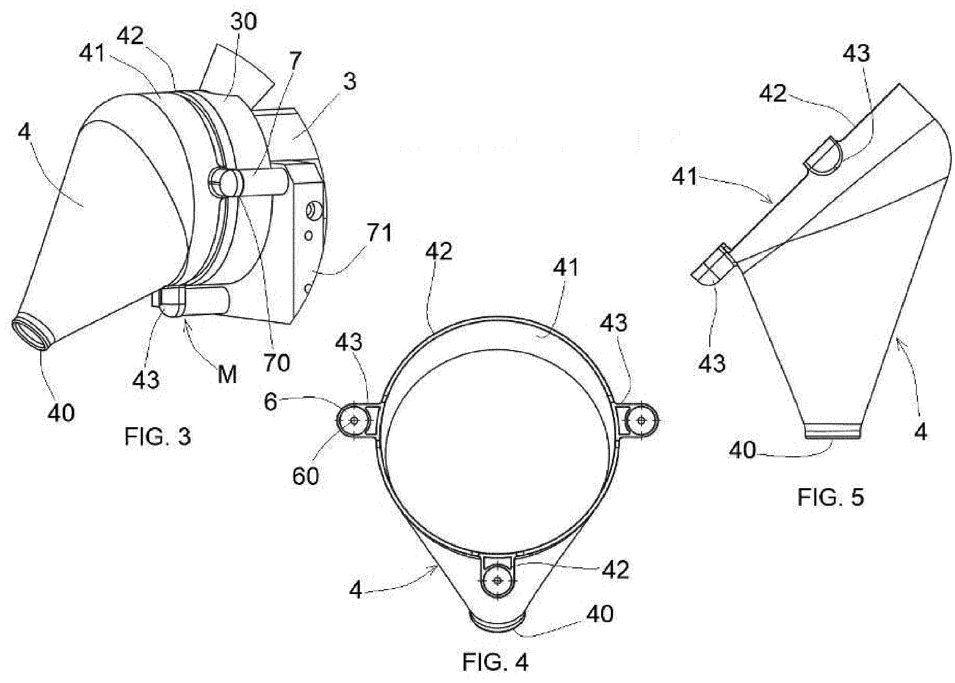

With reference to Figs. 4 and 5, the delivery conduit (4) has an inlet (41) with a substantially circular shape and a higher diameter with respect to the diameter of the delivery mouth (40). The delivery conduit (4) is bent by an angle of approximately 45°, namely the axis of the inlet (41) is inclined by approximately 45° with respect to the axis of the delivery mouth (40). The inlet has a back edge (42) that is coupled with an outlet conduit (30) (Figs. 2 and 3) with circular shape, integral with the body (3) of the machine.

The fast coupling/uncoupling means (M) comprise seats (43) that protrude radially outwards from the outlet (41) in correspondence of the back edge (42) of the outlet.

The magnets (6) are housed inside the seats (43) of the delivery conduit. Each magnet (6) has a disc-like shape with a central hole crossed by a screw (60) that is screwed in the seat (43) of the delivery conduit to firmly fix the magnet.

The ferromagnetic supports (7) are shaped like cylindrical columns provided with an ending circular surface (70) suitable for coming in contact with the magnets (6).

The ferromagnetic supports (7) are mounted on a flange (71) fixed to the body (3) of the machine. To such a purpose, the ferromagnetic supports (7) have an axial hole (72) to receive screw means in order to fix the ferromagnetic supports to the flange. The flange (71) has lateral holes (73) to receive screw means to fix the flange (71) to the body (3) of the machine. The flange (71) has a C-shape and is disposed around a lower portion of the outlet conduit (30) of the body of the machine. For illustrative purposes, the fast coupling/uncoupling means (M) comprise three ferromagnetic supports (7) fixed to the flange (71) that are engaged in corresponding magnets (6) disposed in the seats of the delivery conduit.

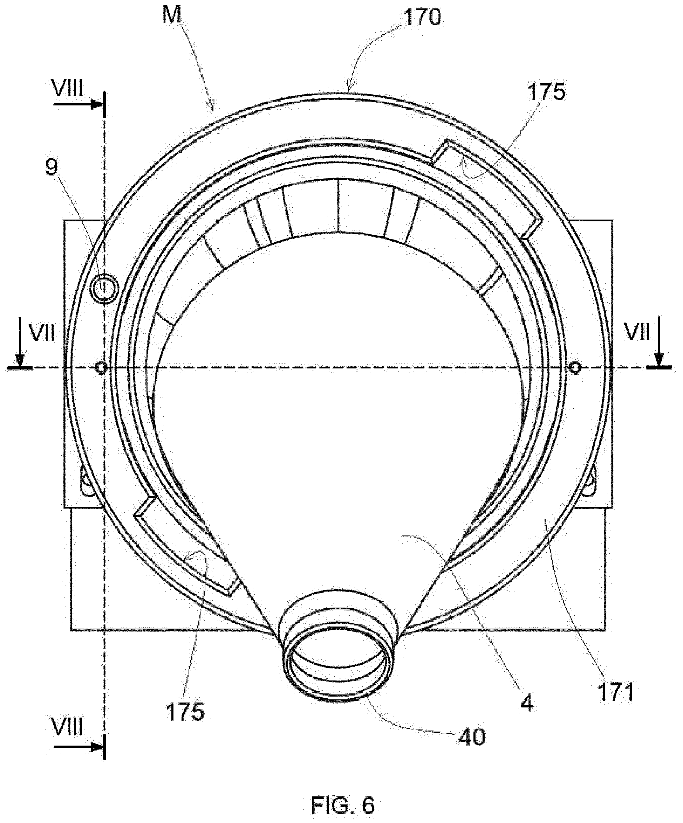

With reference to Figs. 6-14, a second embodiment of the fast coupling/uncoupling means (M) that consist in fit-in coupling means is disclosed.

The fast coupling/uncoupling means (M) comprise tabs (106) that are engaged in a housing (107) in bayonet-coupling mode. The tabs can be obtained in the delivery conduit (4) and the housing (107) can be fixed to the body (3) of the coffee grinding machine or vice versa.

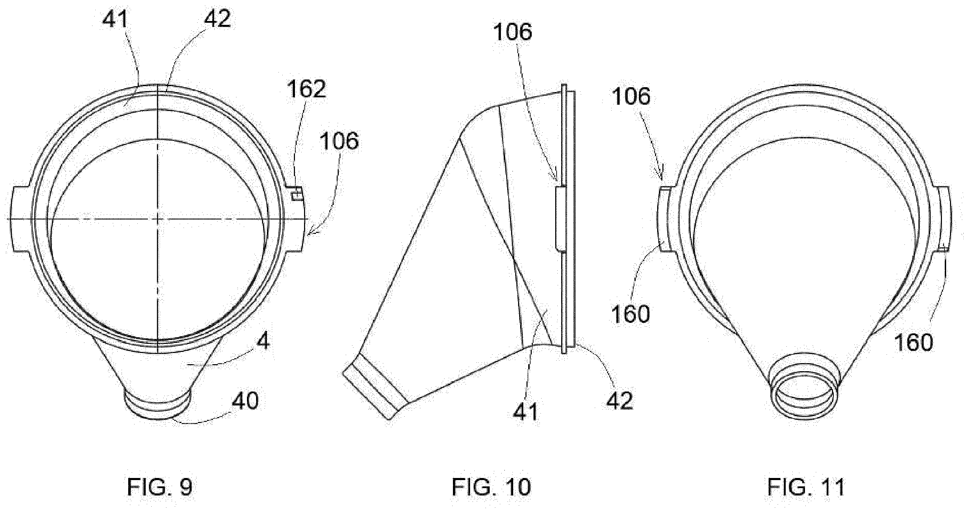

With reference to Figs. 9-11, the delivery conduit (4) comprises two tabs (106) that protrude radially outwards from the inlet (41) of the delivery conduit, in correspondence of the back edge (42) of the inlet. The tabs (106) are disposed in diametrally opposite positions.

Each tab (106) has an L-shaped section and comprises a tooth (160) that protrudes frontally from the tab.

One of the two tabs (106) comprises a stop housing (162) (Fig. 9) with a recessed shape obtained in a back surface of the tab.

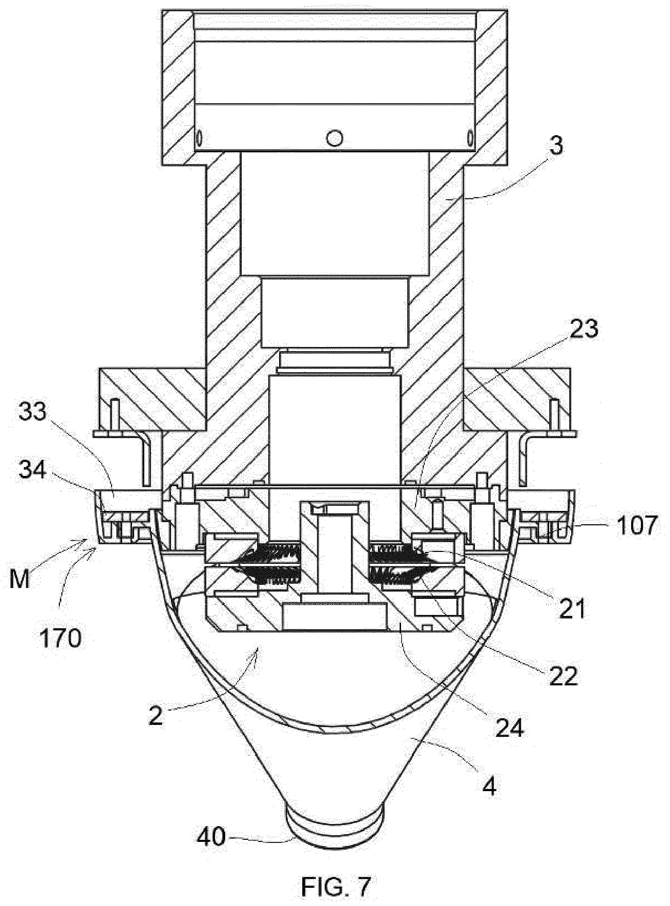

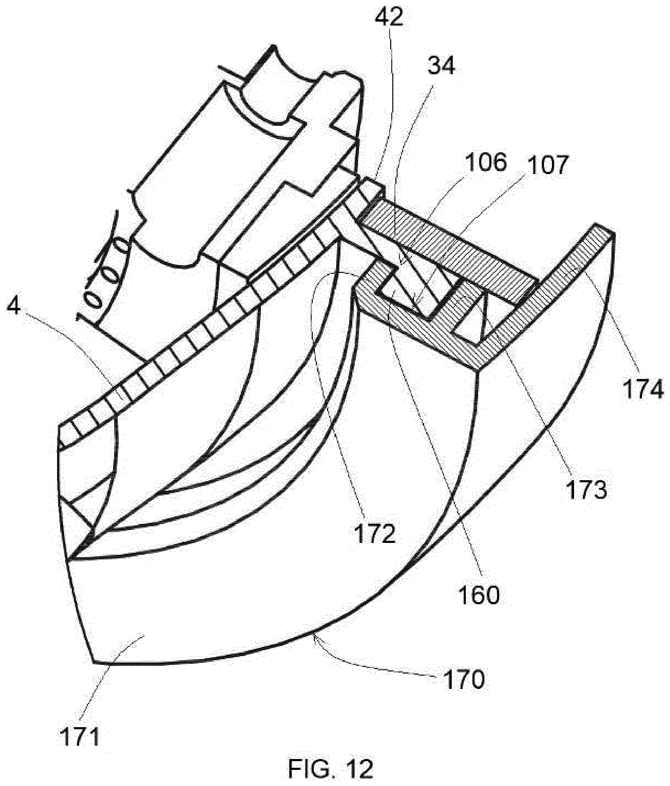

With reference to Figs. 7 and 12, the housing (107) where the tabs (106) are engaged has a U-shape. In view of the above, the tooth (160) of each tab is slidingly engaged in the housing (107).

The housing (107) is obtained in an annular cover (170) fixed at a flange (33) integral to the body (3). A base plate (34) with annular shape, which is preferably made of metal, is fixed to the flange (33).

The annular cover (170) comprises a front wall (171) provided with a first rib (172) and a second rib (173) in projecting position, defining the housing (107). A lateral wall (174) protrudes from the front wall (163) of the annular cover and is disposed around the base plate (34).

With reference to Fig. 6, two openings (175) are provided in the front wall (171) of the annular cover in diametrally opposite positions. The openings (175) of the annular cover are suitably dimensioned to let the tabs (106) of the delivery conduit pass through. In view of the above, the delivery conduit (4) is mounted by frontally inserting the tabs (106) of the delivery conduit in the openings (175) of the annular cover and rotating the delivery conduit, in such a way that the teeth (160) of the tabs penetrate the housing (107) of the annular cover.

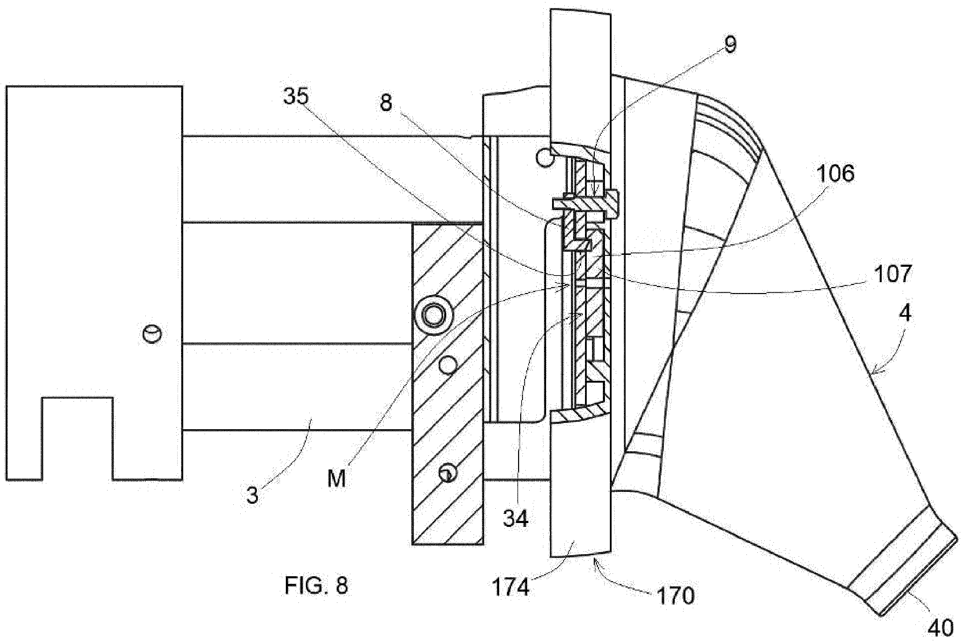

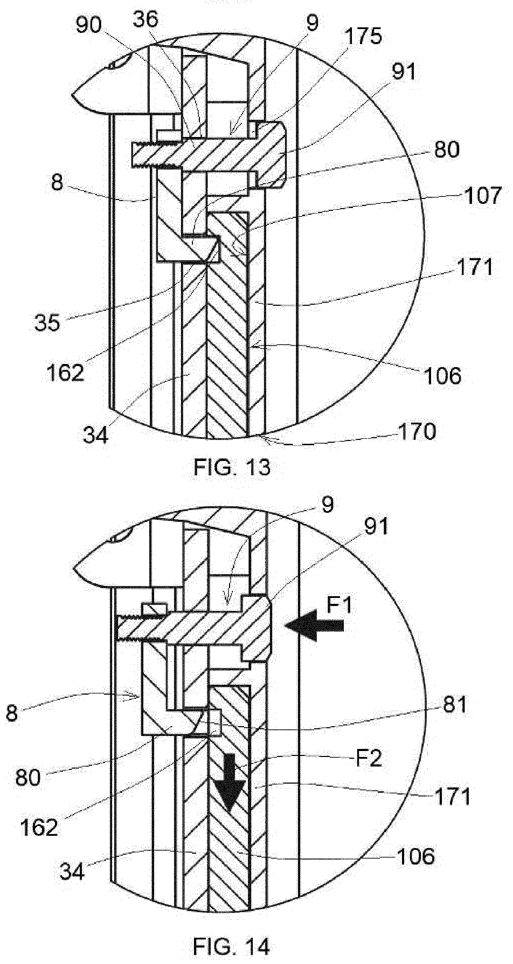

With reference to Figs. 8, 13 and 14, a locking pin (8) is disposed behind the base plate (34). The locking pin (8) has an L-shape and comprises a stop tooth (81) that penetrates a hole (35) of the base plate and protrudes frontally from the base plate in such a way to engage in the stop housing (162) of the tab (106) of the delivery conduit, as shown in Fig. 13. In this way, the delivery conduit (4) is blocked in position and the tabs (106) of the delivery conduit cannot rotate in the housing (107) of the annular cover.

The locking pin (8) is movably mounted to go from a locking position (Fig. 13), wherein the stop tooth (80) protrudes frontally from the base plate in order to be engaged in the stop housing (162) of the tab of the delivery conduit, to an unlocking position (Fig. 14), wherein the stop tooth (80) is disposed in backward position in the hole (35) of the base plate in such a way to disengage the stop housing (162) of the tab of the delivery conduit.

Spring means (not shown in the Figures) maintain the stop tooth (8) in locking position.

Advantageously, the stop tooth (80) has a tapered surface (81) to facilitate its insertion in the stop housing (162) of the tab.

The locking pin (8) is connected to a button (9) that protrudes frontally from the front wall (171) of the annular cover in order to be actuated by a user. The button (9) has a stem (90) that penetrate a hole (36) of the base plate and is engaged in the locking pin (8), and a head (91) that protrudes from a hole (175) of the front wall of the annular cover.

In view of the above, as shown in Fig. 14, when the user presses the head (91) of the button in the direction of the arrow F1, the locking pin (8) is moved from the locking position to the unlocking position and the stop tooth (80) of the locking pin disengages the stop housing (162) of the tab, allowing the delivery conduit (4) to rotate in the direction of the arrow F2, in such a way to bring the tabs (106) of the delivery conduit in correspondence of the openings (175) of the annular cover in order to extract the delivery conduit from the annular cover.

Equivalent variations and modifications, which are within the reach of an expert of the field and fall in any case within the scope of the invention as disclosed by the appended claims, can be made to the present embodiments of the invention.

## Claims

1. Coffee grinding machine (100) comprising:
- a hopper (1) suitable for containing coffee beans,
- a grinding unit (2) suitable for grinding the coffee beans supplied from the hopper in such a way to obtain ground coffee, and
- a delivery conduit (4) connected to a body (3) of the coffee grinding machine in communication with the grinding unit (2) to deliver ground coffee;
**characterized in that** it comprises
fast coupling/uncoupling means (M) suitable for providing a fast coupling/uncoupling of the delivery conduit (4) with/from the body (3) of the coffee grinding machine.

2. The coffee grinding machine (100) of claim 1, wherein the fast coupling/uncoupling means (M) are magnetic retention means.

3. The coffee grinding machine (100) of claim 2, wherein the fast coupling/uncoupling means (M) comprise magnets (6) that are engaged with ferromagnetic supports (7).

4. The coffee grinding machine (100) of claim 3, wherein the magnets (6) are fixed to the delivery conduit (4) and the ferromagnetic supports (7) are fixed to the body (3) of the coffee grinding machine or vice versa.

5. The coffee grinding machine (100) of claim 3, wherein the magnets (6) are housed in housings (42) that protrude radially outwards from an inlet (41) of the delivery conduit and the ferromagnetic supports (7) are columns that protrude frontally from a flange (71) fixed to the body (3) of the coffee grinding machine.

6. The coffee grinding machine (100) of claim 1, wherein the fast coupling/uncoupling means (M) are fit-in coupling means.

7. The coffee grinding machine (100) of claim 6, wherein the fast coupling/uncoupling means (M) comprise tabs (106) that are engaged in a housing (107) in bayonet-coupling mode.

8. The coffee grinding machine (100) of claim 3, wherein the tabs (106) are obtained in the delivery conduit (4) and the housing (107) is fixed to the body (3) of the coffee grinding machine or vice versa.

9. The coffee grinding machine (100) of claim 8, wherein said housing (107) wherein the tabs (106) are engaged has a U-shaped configuration and is obtained in an annular cover (170) fixed to a flange (33) integral with the body (3) of the coffee grinding machine and a base plate (34) with annular shape being fixed to the flange (33) integral with the body of the coffee grinding machine.

10. The coffee grinding machine (100) of claim 9, wherein said annular cover (170) comprises a front wall (171) from where a first rib (172) and a second rib (173) protrude, defining said housing (107) and a lateral wall (174) that is disposed around the base plate (34);
openings (175) obtained in the front wall (171) of the annular cover are suitably dimensioned to receive the tabs (106) of the delivery conduit in order to insert said tabs (106) of the delivery conduit in the housing (107) of the annular cover.

11. The coffee grinding machine (100) of claim 10, comprising a locking pin (8) that is engaged in one of said tabs (106) of the delivery conduit to lock the rotation of the tabs of the delivery conduits inside said housing (107) of the annular cover.

12. The coffee grinding machine (100) of claim 11, wherein the locking pin (8) is disposed behind said base plate (35) and said locking pin comprises a stop tooth (80) that penetrates said base plate (35) and is engaged in a stop housing obtained in one of said tabs of the delivery conduit.

13. The coffee grinding machine (100) of claim 11, comprising a button (9) connected to the locking pin and projecting frontally from the front wall (171) of the annular cover in order to be actuated by the user in such a way to unlock said delivery conduit (4).
